# EUROPÄISCHE PATENTSCHRIFT

(11) **EP 2 058 269 B1**
(45) Veröffentlichungstag und Bekanntmachung des Hinweises auf die Patenterteilung: **11.09.2013**
(21) Anmeldenummer: 08018401.3
(22) Anmeldetag: 21.10.2008
(51) Int. Cl.: B66F 9/00, B60H 1/03

(54) **Flurförderzeug mit einem Verbrennungsmotor und einem elektrischen Aggregat**
Industrial truck with a combustion engine and an electric generator
Chariot de manutention doté d'un moteur à combustion et d'une unité électrique

(30) Priorität: 12.11.2007 DE 102007053842
(43) Veröffentlichungstag der Anmeldung: 13.05.2009
(73) Patentinhaber: STILL GmbH, 22113 Hamburg (DE)
(72) Erfinder: Gonnsen, Boy, 25920 Risum-Lindholm (DE)
(74) Vertreter: Geirhos, Johann

(56) Entgegenhaltungen:
- EP-A2- 0 937 595
- WO-A1-02/34555
- DE-A1- 19 823 457
- DE-A1- 19 910 046
- US-A- 6 072 153

## Beschreibung

Die Erfindung betrifft ein Flurförderzeug, insbesondere Gegengewichtsgabelstapler mit einem Verbrennungsmotor und einem elektrischen Aggregat, das als Generator betreibbar ist, wobei ein elektrischer Widerstand zum Umwandeln von elektrischer Energie in Wärmeenergie vorgesehen ist, der mit einer Flüssigkeitskühlung des Verbrennungsmotors zur Übertragung der Wärmeenergie auf eine Kühlflüssigkeit in Wirkverbindung steht.

Ein derartiges Flurförderzeug ist aus der DE 199 100 46 A1 bekannt.

Bei Flurförderzeugen mit einem verbrennungsmotorisch-elektrischen Antriebssystems sind elektrische Aggregate an den Verbrennungsmotor gekoppelt. Hierzu ist ein elektrischer Generator vorgesehen, der von einem Verbrennungsmotor angetrieben wird. Die von dem Generator erzeugte elektrische Energie wird mittels einer Leistungselektronik an einen oder mehrere elektrische Fahrmotoren weitergeleitet, die mit den angetriebenen Rädern des Flurförderzeugs in trieblicher Verbindung stehen.

Derartige Flurförderzeuge werden generatorisch abgebremst. Der bzw. die Fahrmotoren werden hierbei als Generatoren betrieben, welche die kinetische Energie des Flurförderzeugs in der Bremsphase in elektrische Energie umwandelt. Diese elektrische Energie wird dem in diesem Betriebszustand als Motor arbeitenden Generator zugeführt. Ein hierbei auf einen Rotor des Generators wirkendes Drehmoment stützt sich an einer Kurbelwelle des Verbrennungsmotors ab, wodurch sich die Drehzahl des Verbrennungsmotors erhöht. Hieraus resultiert eine verstärkte Lärmerzeugung durch den Verbrennungsmotor und darüber hinaus eine erhöhte mechanische Abnutzung.

Um das oben beschriebene Hochdrehen des Verbrennungsmotors ganz oder teilweise zu verhindern, ist es bekannt, die während eines Bremsens des Fahrzeugs überschüssige Energie ganz oder teilweise mittels eines elektrischen Widerstands in Wärmeenergie umzuwandeln. Eine Kühlung dieses elektrischen Widerstands erfolgt bei bekannten Flurförderzeugen durch Luft oder die Kühlflüssigkeit einer Flüssigkeitskühlung des Verbrennungsmotors.

Bei einer Kühlung des elektrischen Widerstands mittels der Kühlflüssigkeit der Flüssigkeitskühlung des Verbrennungsmotors ist es bekannt, den elektrischen Widerstand in einem separaten Gehäuse anzuordnen, das mittels entsprechender Kühlflüssigkeitsleitungen an den Kühlflüssigkeitskreislauf der Flüssigkeitskühlung des Verbrennungsmotors angeschlossen ist.

Ein derartiges separates Gehäuse verursacht jedoch einen zusätzlichen Bauraumbedarf im Aggregateraum des Flurförderzeugs. Zudem verursacht der Anschluss des Gehäuses an den Kühlflüssigkeitskreislauf der Flüssigkeitskühlung des Verbrennungsmotors eine hohe Anzahl von Kühlflüssigkeitsleitungen und somit einen hohen Verrohrungsaufwand, der zudem einen hohen Montageaufwand des Flurförderzeugs zur Folge hat.

Der vorliegenden Erfindung liegt die Aufgabe zugrunde, ein Flurförderzeug der eingangs genannten Gattung zur Verfügung zu stellen, bei dem der elektrische Widerstand einen geringen Bauraumbedarf verursacht und eine einfache Montage mit einem geringen Verrohrungsaufwand ermöglicht.

Die Aufgabe wird erfindungsgemäß dadurch gelöst, dass die Flüssigkeitskühlung des Verbrennungsmotors einen Flüssigkeitskühler aufweist, der von einem zwischen Kühlerseitenkästen angeordneten Kühlernetz gebildet ist, wobei der elektrische Widerstand in einen Kühlerseitenkasten des Flüssigkeitskühlers integriert ist. Erfindungsgemäß ist somit der elektrische Widerstand in einem Kühlerseitenkasten des Flüssigkeitskühlers der Flüssigkeitskühlung angeordnet und somit integriert. Hierdurch ergeben sich ein geringer Bauraumbedarf und ein geringer Herstellaufwand für die erfindungsgemäße Anordnung des elektrischen Widerstands, da kein zusätzliches, mit dem elektrischen Widerstand versehenes Gehäuse erforderlich ist, das im Aggregateraum des Flurförderzeugs angeordnet werden muss. Zudem wird durch die Integration des elektrischen Widerstands in den Kühlerseitenkasten des Flüssigkeitskühlers ohne zusätzliche Kühlflüssigkeitsleitungen eine Umströmung des elektrischen Widerstands von der Kühlflüssigkeit der Flüssigkeitskühlung und somit eine Abgabe der Wärmeenergie des elektrischen Widerstands an die Kühlflüssigkeit der Flüssigkeitskühlung erzielt. Hierdurch werden weiterhin eine geringer Bauaufwand und ein geringer Montageaufwand eines erfindungsgemäßen Flurförderzeugs erzielt.

Eine Umströmung des elektrischen Widerstands von der Kühlflüssigkeit kann hierbei auf einfache Weise in allen Betriebszuständen des Flurförderzeugs erzielt werden, wenn gemäß einer Ausführungsform der Erfindung an dem mit dem elektrischen Widerstand versehenen Kühlerseitenkasten ein Kühlflüssigkeitszulauf ausgebildet ist.

Gemäß einer bevorzugten Weiterbildung der Erfindung ist vorgesehen, dass an dem mit dem elektrischen Widerstand versehenen Kühlerseitenkasten ein Kühlflüssigkeitsrücklauf für einen inneren Kühlflüssigkeitskreislauf der Flüssigkeitskühlung ausgebildet ist. Sofern die Flüssigkeitskühlung einen inneren Kreislauf aufweist, bei dem der Flüssigkeitskühler nicht durchströmt wird, kann durch die Anordnung des Kühlflüssigkeitsrücklaufs des inneren Kühlflüssigkeitskreislauf an dem mit dem elektrischen Widerstand versehenen Kühlerseitenkasten auf einfache Weise ein Umströmung des elektrischen Widerstands im inneren Kühlflüssigkeitslaufs sichergestellt werden. Über den elektrischen Widerstand wird hierdurch weiterhin eine Vorwärmung der Kühlflüssigkeit des Kühlflüssigkeitskreislaufs erzielt.

Sofern hierbei an dem weiteren Kühlerseitenkasten ein Kühlflüssigkeitsrücklauf für einen äußeren Kühlflüssigkeitskreislauf der Flüssigkeitskühlung ausgebildet ist, wird auf einfache Weise erzielt, dass im äußeren Kühlflüssigkeitskreislauf der Flüssigkeitskühlung der elektrische Widerstand von der Kühlflüssigkeit umströmt und der Flüssigkeitskühler zur Abkühlung der Kühlflüssigkeit von der Kühlflüssigkeit durchströmt wird.

Gemäß einer Weiterbildung der Erfindung ist der Kühlflüssigkeitszulauf im oberen Bereich des Kühlerseitenkastens und der Kühlfüssigkeitsrücklauf für den inneren Kühlflüssigkeitskreislauf im unteren Bereich des Kühlerseitenkastens angeordnet ist. Hierdurch wird im inneren Kühlflüssigkeitskreislauf eine vertikale Durchströmung des Kühlerseitenkastens erzielt, wodurch die von dem elektrischen Widerstand erzeugte Wärmeenergie wirkungsvoll an die Kühlflüssigkeit abgeben und die Kühlflüssigkeit vorgewärmt werden kann.

Zweckmäßigerweise ist der Kühlflüssigkeitsrücklauf für den äußeren Kühlflüssigkeitskreislauf am unteren Bereich des weiteren Kühlerseitenkastens angeordnet. Im äußeren Kühlflüssigkeitskreislauf wird somit der Flüssigkeitskühler diagonal durchströmt, wodurch die in die Kühlflüssigkeit von dem Verbrennungsmotor und/oder dem elektrischen Widerstand eingebrachte Wärmeenergie auf einfache Weise zur Kühlung der Kühlflüssigkeit an die Umgebung abgegeben werden kann.

Sofern der Kühlerseitenkasten gemäß einer vorteilhaften Ausgestaltungsform der Erfindung mit einem Befestigungsflansch für den elektrischen Widerstand versehen ist, ist eine einfache Montage des elektrischen Widerstands in dem Kühlerseitenkasten erzielbar. Zudem ergeben sich geringe Herstellkosten, da ein üblicher Kühlerseitenkasten für die Integration des elektrischen Widerstands in dem Kühlerseitenkasten lediglich mit einem Befestigungsflansch für den elektrischen Widerstand versehen werden muss.

Besondere Vorteile sind erzielbar, wenn in dem mit dem elektrischen Widerstand versehenen Kühlerseitenkasten ein weiterer Wärmetauscher für ein weiteres Kühlmedium, insbesondere eines Getriebeöls, angeordnet ist. Bei gattungsgemäßen Flurförderzeugen sind zum Antrieb der Antriebsräder Untersetzungsgetriebe vorgesehen, die mit dem Fahrmotor bzw. den Fahrmotoren in Wirkverbindung stehen. Mittels des weiteren Wärmetauschers und dessen Anordnung in dem mit dem elektrischen Widerstand versehenen Kühlerseitenkasten kann hierbei im inneren Kühlflüssigkeitskreislauf auf einfache Weise eine Vorwärmung des Getriebeöls und im äußeren Kühlflüssigkeitslauf ein Kühlung des Getriebeöls der Untersetzungsgetriebe erzielt werden.

Das elektrische Aggregat ist gemäß einer bevorzugten Ausführungsform der Erfindung der Erfindung von einem elektrischen Fahrmotor, insbesondere einem Asynchronmotor, des Flurförderzeugs gebildet. In der Bremsphase des Flurförderzeugs wird der Fahrmotor als Generator betrieben und wandelt die kinetische Energie des Flurförderzeugs in elektrische Energie um. Mittels des in den Kühlerseitenkasten integrierten elektrischen Widerstands kann hierbei die von dem als Generator betriebenen Fahrmotor erzeugte elektrische Energie mit geringem Bauaufwand und ohne zusätzlichen Bauraumbedarf als Wärmenergie in die Kühlflüssigkeit abgegeben werden.

Das elektrische Aggregat kann gemäß einer weiteren Ausführungsform der Erfindung als ein mit dem Verbrennungsmotor trieblich verbundener Generator gebildet sein.

Sofern die von dem als Generator betriebenen Fahrmotor in der Bremsphase erzeugte elektrische Energie dem als Motor betriebenen Generator zugeführt wird, kann mittels des elektrischen Widerstands ein Hochdrehen des Verbrennungsmotors wirkungsvoll begrenzt werden.

Weitere Vorteile und Einzelheiten der Erfindung werden anhand des in den schematischen Figuren dargestellten Ausführungsbeispiels näher erläutert. Hierbei zeigen
- Figur 1: ein erfindungsgemäßes Flurförderzeug und
- Figur 2: den Flüssigkeitskühler eines erfindungsgemäßen Flurförderzeugs in einer vergrößerten Darstellung.

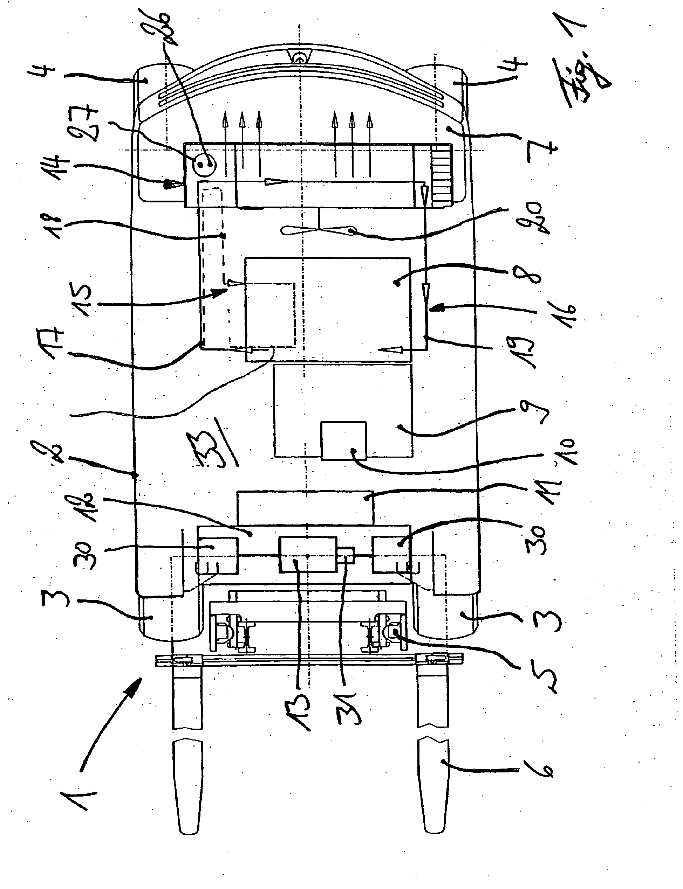

In der Figur 1 ist ein als Gegengewichtsgabelstapler ausgebildetes erfindungsgemäßes Flurförderzeug 1 dargestellt. Das Flurförderzeug 1 weist einen Fahrzeugrahmen 2 auf, der im lastzugewandten Bereich mit zwei Antriebsrädern 3 und im lastabgewandten Bereich mit mindestens einem gelenkten Rad 4 versehen ist. Am vorderen lastzugewandten Bereich des Flurförderzeugs 1 ist ein Hubgerüst 5 angeordnet, an dem ein als Lastgabel ausgebildetes Lastaufnahmemittel 6 auf- und abbewegbar angeordnet ist. Im lastabgewandten Bereich ist das Flurförderzeug 1 mit einem Gegengewicht 7 versehen.

Das Flurförderzeug 1 ist mit einem verbrennungsmotorisch-elektrischen Antriebssystem versehen, das einen beispielsweise als Dieselmotor ausgebildeten Verbrennungsmotors 8 aufweist, der mit einem elektrischen Generator 9 trieblich verbunden ist. Von dem Verbrennungsmotor 8 wird weiterhin eine Hydraulikpumpe 10 angetrieben, die zur Versorgung einer Arbeitshydraulik, beispielsweise eines Hubantriebs und eines Neigeantriebs sowie gegebenenfalls eines Seitenschiebers, und einer Lenkungshydraulik vorgesehen ist.

Die von dem Generator 9 erzeugte elektrische Energie wird einer Leistungselektronikeinheit 11 zugeführt, mittels der mindestens ein in einer Antriebsachse 12 angeordneten elektrischer Fahrmotor 13, beispielsweise ein Asynchronmotor, mit elektrischer Energie versorgbar ist. Der Fahrmotor 13 steht hierbei beispielsweise unter Zwischenschaltung eines Differentialgetriebes 31 und zweier Untersetzungsgetrieben 30 mit den Antriebsrädern 3 zu deren Antrieb in Wirkverbindung. Anstelle einer derartigen Einmotorachse, bei der ein Fahrmotor 13 beide Antriebsräder 3 antreibt, kann ebenfalls eine Zweimotorachse vorgesehen werden, bei der jeweils ein Fahrmotor unter Zwischenschaltung eines Untersetzungsgetriebes mit dem entsprechenden Antriebsrad 3 in trieblicher Verbindung steht.

Der Verbrennungsmotor 8, der Generator 9, die Hydraulikpumpe 10 sowie die Leistungselektronik 11 und die Antriebsachse 12 sind hierbei zusammen mit weiteren nicht mehr dargestellten Komponenten in einem Aggregateraum 33 des Flurförderzeugs 1 angeordnet.

Der Verbrennungsmotor 8 ist mit einer Flüssigkeitskühlung versehen. Die Flüssigkeitskühlung weist einen beispielsweise im Bereich des Gegengewichts 7 angeordneten Flüssigkeitskühler 14 auf, der mit dem Verbrennungsmotor 8 in einem inneren Kühlflüssigkeitskreislauf 15 und einem äußeren Kühlflüssigkeitskreislauf 16 verbunden ist. Im inneren Kühlflüssigkeitskreislauf 15 strömt die Kühlflüssigkeit von dem Verbrennungsmotor 8 in einer Kühlflüssigkeitszulaufleitung 17 zu dem Flüssigkeitskühler 14 und in einer ersten Kühlflüssigkeitsrücklaufleitung 18 zu dem Verbrennungsmotor 8 zurück, ohne den Flüssigkeitskühler 14 zu durchströmen. In dem äußeren Kühlflüssigkeitskreislauf 16 strömt die Kühlflüssigkeit dem Flüssigkeitskühler 14 über die Kühlflüssigkeitszulaufleitung 17 zu und über eine zweite Kühlflüssigkeitsrücklaufleitung 19 unter Durchströmung des Flüssigkeitskühlers 14 zu dem Verbrennungsmotor 8 zurück. Der Flüssigkeitskühler 14 wird mit Hilfe eines Lüfters 20 von Luft durchströmt, um die von der Kühlflüssigkeit an die Umgebungsluft abgebbare Wärmemenge zu erhöhen.

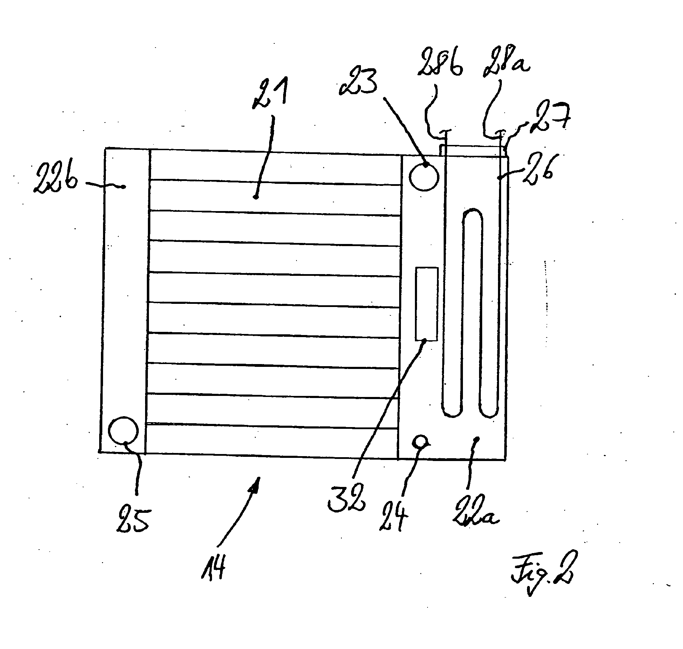

Der Flüssigkeitskühler 14 ist in der Figur 2 in einer Draufsicht dargestellt und weist ein als Wärmetauscher ausgebildetes Kühlernetz 21 auf, das zwischen Kühlerseitenkästen 22a, 22b angeordnet ist. Der Kühlerseitenkasten 22a ist hierbei im oberen Bereich mit einem von einem Anschluss für die Kühlflüssigkeitszulaufleitung 17 gebildeten Kühlflüssigkeitszulauf 23 versehen. Im unteren Bereich dieses Kühlerseitenkastens 22a ist ein von einem Anschluss für die erste Kühlflüssigkeitsrücklaufleitung 18 gebildeter Kühlflüssigkeitsrücklauf 24 des inneren Kühlflüssigkeitskreislaufs 15 angeordnet. An dem weiteren Kühlerseitenkasten 22b ist um unteren Bereich ein von einem Anschluss für die zweite Kühlflüssigkeitsrücklaufleitung 19 gebildeter Kühlflüssigkeitsrücklauf 25 für den äußeren Kühlflüssigkeitskreislauf 16 angeordnet.

Erfindungsgemäß ist im Kühlerseitenkasten 22a ein elektrischer Widerstand 26 angeordnet und somit integriert. Hierzu ist an der Oberseite des Kühlerseitenkastens 22a ein von einer Anschlussplatte gebildeter Befestigungsflansch 27 angeordnet, der gleichzeitig eine Montageöffnung bildet, wodurch der Widerstand 26 durch die von dem Befestigungsflansch 27 gebildete Montageöffnung in den Kühlerseitenkasten 22a montiert und mittels des Befestigungsflansches 27 an dem Kühlerseitenkasten 22a befestigt werden kann. Mittels elektrischer Leitungen 28a, 28b ist der elektrische Widerstand 26 über eine nicht mehr dargestellte Anschlussverbindung, beispielsweise eine Steckverbindung, mit dem Fahrmotor 13 und/oder dem Generator 9 verbindbar.

In dem Kühlerseitenkasten 22a ist weiterhin ein Wärmetauscher 32 für ein weiteres Kühlmedium angeordnet. Der Wärmetauscher 32 kann hierbei auf nicht mehr dargestellte Weise an die Untersetzungsgetriebe 30 angeschlossen sein und von dem als Getriebeöl der Untersetzungsgetriebe 30 ausgebildeten Kühlmedium durchströmt sein.

Während der Bremsphase des Flurförderzeugs wird der Fahrantriebsmotor 13 generatorisch betrieben, wobei die kinetische Energie des Flurförderzeugs 1 in elektrische Energie umgewandelt wird. Diese elektrische Energie wird direkt oder indirekt, beispielsweise über die Leistungselektronikeinheit 11, dem elektrischen Widerstand 26 zugeführt und in Wärmeenergie umgewandelt.

Es ist ebenfalls möglich, die von dem Fahrmotor 13 in der Bremsphase erzeugte elektrische Energie dem in der Bremsphase als Motor betriebenen Generator 9 zuzuführen, der sich an dem Verbrennungsmotor 8 abstützt. Hierbei wird lediglich diejenige elektrische Energie, die nicht von dem Generator 9 aufgenommen werden kann, dem elektrischen Widerstand 26 zugeführt und in Wärmeenergie umgewandelt.

Die von dem elektrischen Widerstand 26 erzeugte Wärmeenergie wird hierbei an die Kühlflüssigkeit der Flüssigkeitskühlung des Verbrennungsmotors 8 abgegeben und an die Umgebung abgeführt.

Bis zum Erreichen einer gewünschten Betriebstemperatur ist der Flüssigkeitskühler 14 mit dem Verbrennungsmotor 8 im inneren Kühlflüssigkeitskreislauf 15 verbunden. Hierbei strömt Kühlflüssigkeit dem Flüssigkeitskühler 14 über die Kühlflüssigkeitszulaufleitung 17 an dem Kühlflüssigkeitszulauf 23 zu, durchströmt den Kühlerseitenkasten 22a in vertikaler Richtung und strömt über den Kühlflüssigkeitsrücklauf 24 sowie die Kühlflüssigkeitsrücklaufkleitung 18 zum Verbrennungsmotor 8 zurück. Durch die Integration des elektrischen Widerstands 26 in den Kühlerseitenkasten 22a wird hierbei in der Bremsphase des Flurförderzeugs eine Vorwärmung der Kühlflüssigkeit erzielt. Zudem wird über den elektrischen Widerstand 26 und den weiteren Wärmetaucher 31 in der Bremsphase des Flurförderzeugs 1 eine Vorwärmung des Getriebeöls der Untersetzungsgetriebe 30 erzielt. Durch die Integration des elektrischen Widerstands 26 in den Kühlerseitenkasten 22a und die Führung der Kühlflüssigkeit des inneren Kühlflüssigkeitskreislauf 15 über den Kühlerseitenkasten 22a wird hierbei erzielt, dass bei kaltem Flurförderzeug die von dem elektrischen Widerstand 26 in der Bremsphase erzeugte hohe Menge an Wärmeenergie an die Kühlflüssigkeit abgegeben werden kann.

Sobald die gewünschte Betriebstemperatur erreicht und überschritten wird, wird der Verbrennungsmotor 8 mit dem Flüssigkeitskühler 14 im äußeren Kühlflüssigkeitskreislauf 16 verbunden. Kühlflüssigkeit strömt hierbei dem Flüssigkeitskühler 14 über die Kühlflüssigkeitszulaufleitung 17 an dem Kühlflüssigkeitszulauf 23 zu, durchströmt den Flüssigkeitskühler 14 und somit das Kühlernetz 21 diagonal und strömt über den Kühlflüssigkeitsrücklauf 25 sowie die Kühlflüssigkeitsrücklaufleitung 19 zum Verbrennungsmotor 8 zurück. Die von dem in den Kühlerseitenkasten 22a integrierten elektrischen Widerstand 26 an die Kühlflüssigkeit abgegebene Wärmeenergie wird hierbei über den Flüssigkeitskühler 14 und das Kühlernetz 21 an die Umgebung abgegeben. Durch die Integration des elektrischen Widerstands 26 in den Kühlerseitenkasten 22a wird hierbei ein geringer Abstand zwischen dem elektrischen Widerstand 26 und dem Kühlernetz 21 erzielt, wodurch eine verbesserte Wärmeableitung der von dem elektrischen Widerstand 26 in die Kühlflüssigkeit eingebrachten Wärmeenergie erzielt wird.

Durch die Integration des elektrischen Widerstands 26 in den Kühlerseitenkasten 22a des Flüssigkeitskühlers 14 wird hierbei von dem elektrischen Widerstand 26 kein zusätzlicher Bauraum innerhalb des Aggregateraums 33 des Flurförderzeugs 1 beansprucht. Zudem sind keine zusätzlichen Kühlflüssigkeitsleitungen für die Einbindung des elektrischen Widerstands 26 in den inneren Kühlflüssigkeitskreislauf 15 sowie den äußeren Kühlflüssigkeitskreislauf 16 erforderlich. Hierdurch ergeben sich weiterhin ein geringer Bauaufwand und ein geringer Montageaufwand des erfindungsgemäßen Flurförderzeugs.

## Patentansprüche

1. Flurförderzeug, insbesondere Gegengewichtsgabelstapler mit einem Verbrennungsmotor und einem elektrischen Aggregat, das als Generator betreibbar ist, wobei ein elektrischer Widerstand zum Umwandeln von elektrischer Energie in Wärmeenergie vorgesehen ist, der mit einer Flüssigkeitskühlung des Verbrennungsmotors zur Übertragung der Wärmeenergie auf eine Kühlflüssigkeit in Wirkverbindung steht, wobei die Flüssigkeitskühlung des Verbrennungsmotors einen Flüssigkeitskühler (14) aufweist, **dadurch gekennzeichnet, dass** der Flüssigkeitskühler von einem zwischen Kühlerseitenkästen (22a, 22b) angeordneten Kühlemetz (21) gebildet ist, wobei der elektrische Widerstand (26) in einen Kühlerseitenkasten (22a) des Flüssigkeitskühlers (14) integriert ist.

2. Flurförderzeug nach Anspruch 1, **dadurch gekennzeichnet, dass** an dem mit dem elektrischen Widerstand (26) versehenen Kühlerseitenkasten (22a) ein Kühlflüssigkeitszulauf (23) ausgebildet ist.

3. Flurförderzeug nach Anspruch 1 oder 2, **dadurch gekennzeichnet, dass** an dem mit dem elektrischen Widerstand (26) versehenen Kühlerseitenkasten (22a) ein Kühlflüssigkeitsrücklauf (24) für einen inneren Kühlflüssigkeitskreislauf (15) der Flüssigkeitskühlung ausgebildet ist.

4. Flurförderzeug nach einem der Ansprüche 1 bis 3, **dadurch gekennzeichnet, dass** an dem weiteren Kühlerseitenkasten (22b) ein Kühlflüssigkeitsrücklauf (25) für eine äußeren Kühlflüssigkeitskreislauf (16) der Flüssigkeitskühlung ausgebildet ist.

5. Flurförderzeug nach einem der Ansprüche 2 bis 4, **dadurch gekennzeichnet, dass** der Kühlflüssigkeitszulauf (23) im oberen Bereich des Kühlerseitenkastens (22a) angeordnet ist.

6. Flurförderzeug nach einem der Ansprüche 3 bis 5, **dadurch gekennzeichnet, dass** der Kühlfüssigkeitsrücklauf (25) für den inneren Kühlflüssigkeitskreislauf (15) im unteren Bereich des Kühlerseitenkastens (22a) angeordnet ist.

7. Flurförderzeug nach einem der Ansprüche 4 bis 6, **dadurch gekennzeichnet, dass** der Kühlflüssigkeitsrücklauf (25) für den äußeren Kühlflüssigkeitskreislauf (16) am unteren Bereich des weiteren Kühlerseitenkastens (22b) angeordnet ist.

8. Flurförderzeug nach einem der Ansprüche 1 bis 7, **dadurch gekennzeichnet, dass** der Kühlerseitenkasten (22a), insbesondere an der Oberseite, mit einem Befestigungsflansch (27) für den elektrischen Widerstand (26) versehen ist.

9. Flurförderzeug nach einem der Ansprüche 1 bis 8, **dadurch gekennzeichnet, dass** in dem mit dem elektrischen Widerstand (26) versehenen Kühlerseitenkasten (22a) mindestens ein weiterer Wärmetauscher (32) für ein weiteres Kühlmedium, insbesondere eines Getriebeöls, angeordnet ist.

10. Flurförderzeug nach einem der Ansprüche 1 bis 9, **dadurch gekennzeichnet, dass** das elektrische Aggregat von einem elektrischen Fahrmotor (13), insbesondere einem Asynchronmotor, des Flurförderzeugs gebildet ist.

11. Flurförderzeug nach einem der vorangegangenen Ansprüche, **dadurch gekennzeichnet, dass** das elektrische Aggregat von einem mit dem Verbrennungsmotor (8) trieblich verbundenen Generator (9) gebildet ist.

## Claims

1. Industrial truck, in particular counterweight fork-lift truck, having an internal combustion engine and an electrical unit which can be operated as a generator, wherein an electrical resistor for converting electrical energy into thermal energy is provided, the said electrical resistor being operatively connected to a liquid cooling means of the internal combustion engine in order to transfer the thermal energy to a cooling liquid, wherein the liquid cooling means of the internal combustion engine has a liquid radiator (14), **characterized in that** the liquid radiator is formed by a radiator network (21) which is arranged between radiator side boxes (22a, 22b), wherein the electrical resistor (26) is integrated in a radiator side box (22a) of the liquid radiator (14).

2. Industrial truck according to Claim 1, **characterized in that** a cooling liquid feed (23) is formed on that radiator side box (22a) which is provided with the electrical resistor (26).

3. Industrial truck according to Claim 1 or 2, **characterized in that** a cooling liquid return (24) for an inner cooling liquid circuit (15) of the liquid cooling means is formed on that radiator side box (22a) which is provided with the electrical resistor (26).

4. Industrial truck according to one of Claims 1 to 3, **characterized in that** a cooling liquid return (25) for an outer cooling liquid circuit (16) of the liquid cooling means is formed on the further radiator side box (22b).

5. Industrial truck according to one of Claims 2 to 4, **characterized in that** the cooling liquid feed (23) is arranged in the upper region of the radiator side box (22a).

6. Industrial truck according to one of Claims 3 to 5, **characterized in that** the cooling liquid return (24) for the inner cooling liquid circuit (15) is arranged in the lower region of the radiator side box (22a).

7. Industrial truck according to one of Claims 4 to 6, **characterized in that** the cooling liquid return (25) for the outer cooling liquid circuit (16) is arranged on the lower region of the further radiator side box (22b).

8. Industrial truck according to one of Claims 1 to 7, **characterized in that** the radiator side box (22a), in particular at the top end, is provided with a fastening flange (27) for the electrical resistor (26).

9. Industrial truck according to one of Claims 1 to 8, **characterized in that** at least one further heat exchanger (32) for a further cooling medium, in particular a gearbox oil, is arranged in the radiator side box (22a) which is provided with the electrical resistor (26).

10. Industrial truck according to one of Claims 1 to 9, **characterized in that** the electrical unit is formed by an electric traction motor (13), in particular an asynchronous motor, of the industrial truck.

11. Industrial truck according to one of the preceding claims, **characterized in that** the electrical unit is formed by a generator (9) which is drive-connected to the internal combustion engine (8).

## Revendications

1. Chariot de manutention, en particulier chariot élévateur à fourche à contrepoids comprenant un moteur à combustion interne et une unité électrique qui peut fonctionner en tant que générateur, une résistance électrique étant prévue pour convertir de l'énergie électrique en énergie thermique, laquelle est en liaison fonctionnelle avec un refroidissement par liquide du moteur à combustion interne pour transmettre l'énergie thermique à un liquide de refroidissement, le refroidissement par liquide du moteur à combustion interne présentant un radiateur à liquide (14), **caractérisé en ce que** le radiateur à liquide est formé par un réseau de radiateur (21) disposé entre des compartiments latéraux du radiateur (22a, 22b), la résistance électrique (26) étant intégrée dans un compartiment latéral du radiateur (22a) du radiateur à liquide (14).

2. Chariot de manutention selon la revendication 1, **caractérisé en ce qu'**une alimentation en liquide de refroidissement (23) est réalisée au niveau du compartiment latéral du radiateur (22a) pourvu de la résistance électrique (26).

3. Chariot de manutention selon la revendication 1 ou 2, **caractérisé en ce qu'**un retour de liquide de refroidissement (24) pour un circuit de liquide de refroidissement interne (15) du refroidissement à liquide est réalisé au niveau du compartiment latéral du radiateur (22a) pourvu de la résistance électrique (26).

4. Chariot de manutention selon l'une quelconque des revendications 1 à 3, **caractérisé en ce qu'**un retour de liquide de refroidissement (25) pour un circuit de liquide de refroidissement externe (16) du refroidissement liquide est réalisé au niveau du compartiment latéral supplémentaire du radiateur (22b).

5. Chariot de manutention selon l'une quelconque des revendications 2 à 4, **caractérisé en ce que** l'alimentation en liquide de refroidissement (23) est disposée dans la région supérieure du compartiment latéral du radiateur (22a).

6. Chariot de manutention selon l'une quelconque des revendications 3 à 5, **caractérisé en ce que** le retour de liquide de refroidissement (24) pour le circuit de liquide de refroidissement interne (15) est disposé dans la région inférieure du compartiment latéral du radiateur (22a).

7. Chariot de manutention selon l'une quelconque des revendications 4 à 6, **caractérisé en ce que** le retour de liquide de refroidissement (25) pour le circuit de liquide de refroidissement externe (16) est disposé au niveau de la région inférieure du compartiment latéral supplémentaire du radiateur (22b).

8. Chariot de manutention selon l'une quelconque des revendications 1 à 7, **caractérisé en ce que** le compartiment latéral du radiateur (22a), en particulier au niveau du côté supérieur, est pourvu d'une bride de fixation (27) pour la résistance électrique (26).

9. Chariot de manutention selon l'une quelconque des revendications 1 à 8, **caractérisé en ce qu'**au moins un échangeur de chaleur supplémentaire (32) pour un fluide de refroidissement supplémentaire, en particulier une huile de boîte de vitesses, est disposé dans le compartiment latéral du radiateur (22a) pourvu de la résistance électrique (26).

10. Chariot de manutention selon l'une quelconque des revendications 1 à 9, **caractérisé en ce que** l'unité électrique est formée par un moteur de conduite électrique (13), en particulier un moteur asynchrone, du chariot de manutention.

11. Chariot de manutention selon l'une quelconque des revendications précédentes, **caractérisé en ce que** l'unité électrique est formée par un générateur (9) connecté par entraînement au moteur à combustion interne (8).
